# EUROPÄISCHE PATENTANMELDUNG

(11) **EP 2 799 776 A1**
(43) Veröffentlichungstag der Anmeldung: **05.11.2014**
(21) Anmeldenummer: 14164575.4
(22) Anmeldetag: 14.04.2014
(51) Int. Cl.: F23R 3/28

(54) **Brennerdichtung für Gasturbinen-Brennkammerkopf und Hitzeschild**

(30) Priorität: 30.04.2013 DE 102013007443
(71) Anmelder: Rolls-Royce Deutschland Ltd & Co KG, 15827 Blankenfelde-Mahlow (DE)
(72) Erfinder: Clemen, Dr.-Ing. Carsten, 15749 Mittenwalde (DE); Ebel, Michael, 15834 Rangsdorf (DE)
(74) Vertreter: Hoefer & Partner

(57) **Zusammenfassung**

Die Erfindung bezieht sich auf eine Brennkammer für eine Gasturbine mit einem Brennkammerkopf (37) und einem Hitzeschild (34), welche einstückig ausgebildet sind, wobei das Hitzeschild (34) mit zumindest einer Ausnehmung (41) versehen ist, in welcher ein Brenner (29) oder eine den Brenner (29) umgreifende Ringmanschette (44) angeordnet ist, wobei zwischen dem Hitzeschild (34) und dem Brenner (29) eine Brennerdichtung angeordnet ist, dadurch gekennzeichnet, dass das Hitzeschild (34) im Bereich der Ausnehmung (41) mit einer Ringnut (40) versehen ist, in welcher zumindest ein die Brennerdichtung bildendes elastisches Dichtelement (39) angeordnet ist.

## Beschreibung

Die Erfindung bezieht sich auf eine Brennerdichtung für einen Gasturbinen-Brennkammerkopf und ein Hitzeschild gemäß den Merkmalen des Oberbegriffs des Anspruchs 1.

Im Einzelnen bezieht sich die Erfindung auf eine Brennkammerkopfanordnung einer Gasturbine, bei welcher ein Brennkammerkopf und ein Hitzeschild vorgesehen sind, welche einstückig miteinander ausgebildet sind. Das Hitzeschild ist mit zumindest einer Ausnehmung oder Durchtrittsöffnung versehen, in welcher ein Brenner oder eine Ringmanschette, welche den Brenner umschließt, angeordnet ist. Zwischen dem Hitzeschild und dem Brenner ist eine Brennerdichtung vorgesehen.

Der Stand der Technik zeigt unterschiedliche Konstruktionen, um zum einen den Brenner in der Ausnehmung zu fixieren und um zum anderen eine Dichtungsfunktion zwischen dem Brennkammerkopf, dem Hitzeschild und dem Brenner zu gewährleisten. Hierzu wird auf die EP 2 503 242 A2, die DE 44 27 222 A1 und die DE 100 48 864 A1 verwiesen. Die Konstruktionen sind hinsichtlich der Fertigung und ihrer Montage aufwändig und kompliziert und damit kostenintensiv.

Der Erfindung liegt die Aufgabe zugrunde, einen Brennkammerkopf für eine Gasturbine zu schaffen, welcher bei einfachem Aufbau und einfacher, kostengünstiger Herstellbarkeit leicht montierbar ist und eine hohe Betriebssicherheit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Hitzeschild im Bereich der Ausnehmung mit einer Ringnut versehen ist, in welcher ein die Brennkammerdichtung bildendes elastisches Dichtelement angeordnet ist.

Erfindungsgemäß ist somit eine Anordnung geschaffen, bei welcher der Brennkammerkopf und das Hitzeschild einstückig ausgebildet sind und somit ein integrales Bauteil bilden. Die Herstellung kann beispielsweise durch Additivverfahren erfolgen. Dabei kann entweder ein integrales, sich um den gesamten Umfang der Brennerachse erstreckendes Bauteil gefertigt werden oder ein Bauteil, welches aus mehreren Umfangssegmenten gefügt ist. Die Fügeverfahren können beispielsweise Schweißen, Schraubverbindungen oder Ähnliches umfassen. Die Brennkammerwände der erfindungsgemäßen Ausgestaltung können integral mit dem Brennkammerkopf und dem Hitzeschild gefertigt werden. Alternativ ist es auch möglich, diese mit dem Brennkammerkopf/Hitzeschild zu fügen, so wie dies Stand der Technik zeigt.

Das Hitzeschild ist mit einer Ausnehmung oder Durchtrittsöffnung versehen, durch weiche der Brenner eingeführt werden kann. Zwischen dem Brenner und dem Hitzeschild ist die Brennerdichtung angeordnet, welche die Brennkammer zum Brennkammerkopf hin abdichtet.

Erfindungsgemäß ist vorgesehen, dass die Kombination aus Brennkammerkopf und Hitzeschild im Bereich der Ausnehmung oder Durchtrittsöffnung für den Brenner mit einer Ringnut versehen ist. Die Ringnut ist stromauf der Ausnehmung oder Durchtrittsöffnung im Hitzeschild ausgebildet.

In der Ringnut ist erfindungsgemäß ein die Brennerdichtung bildendes elastisches Dichtelement angeordnet. Dieses ist, im Gegensatz zum Stand der Technik, nicht starr, sondern ähnlich einem Federring ausgebildet. Somit lässt sich das elastische Dichtelement flexibel zusammendrücken, um in die Nut eingeführt zu werden. In der Nut entspannt sich das elastische Dichtungselement wieder auf seine ursprüngliche Größe und bildet somit einen festen Sitz in der Nut, wodurch zum einen eine Fixierung des Brenners in dem Hitzeschild gewährleistet wird und wodurch zum anderen die Dichtfunktion sichergestellt ist.

Bevorzugterweise weist das elastische Dichtelement (die Brennerdichtung) einen Außendurchmesser auf, welcher kleiner ist, als der Außendurchmesser der Nut, welche jedoch größer ist, als der Durchmesser der Ausnehmung. Somit wird ein Herausrutschen aus der Nut nach vorne in die Brennkammer verhindert, während gleichzeitig ein ausreichendes Spiel vorgesehen ist, um thermische Extraktionen und Kontraktionen zu kompensieren. Bevorzugterweise ist in günstiger Weiterbildung weiterhin vorgesehen, dass die axiale Länge der Nut größer ist, als die axiale Dichtung der Brennerdichtung bzw. des elastischen Dichtelements. Hierdurch wird ebenfalls ein ausreichendes Spiel vorgesehen, um thermische Einflüsse ausgleichen zu können.

Erfindungsgemäß ist es somit möglich, das elastische Dichtelement durch dessen elastische Verformung in die Nut einzusetzen. In gleicher Weise kann das elastische Dichtelement zur Demontage auch wieder entfernt werden. Das erfindungsgemäße elastische Dichtelement ist somit mehrfach verwendbar und verschleißsicher.

In besonders günstiger Ausgestaltung der Erfindung ist es möglich, sowohl in dem Hitzeschild als auch in der Brennerdichtung (in dem elastischen Dichtelement) Effusionskühllöcher vorzusehen.

Das erfindungsgemäße elastische Dichtelement kann als Federring ausgebildet sein, wobei es dabei insbesondere auch wendelartig, ähnlich einem Schlüsselring ausgebildet sein kann.

Im Rahmen der Erfindung können in der Nut auch mehrere derartige elastische Dichtelemente angeordnet sein. Hierdurch ist es möglich, den Brenner oder ein zugeordnetes Bauteil, bei welchem eine Ringmanschette vorgesehen ist, in axialer Richtung in beiden Richtungen zu fixieren und abzudichten.

In Abwandlung der Erfindung ist es auch möglich, die Ringnut nicht oder nicht nur im Wandungsbereich der Ausnehmung vorzusehen, sondern alternativ hierzu auch am Außenumfang des Brenners oder einer dem Brenner zugeordneten Manschette. Auch hier schnappt das elastische Dichtelement nach der Montage in die Nut ein und ist dort fixiert.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Darstellung einer erfindungsgemäßen Brennkammer,
- Fig. 3: eine vergrößerte schematische Detailansicht des erfindungsgemäßen Brennkammerkopfes mit Hitzeschild und elastischem Dichtelement,
- Fig. 4: ein weiteres Ausführungsbeispiel in analoger Darstellung zu Fig. 3,
- Fig. 5: eine vereinfachte Schnittansicht eines Ausführungsbeispiels unter Verwendung zweier elastischer Dichtelemente,
- Fig. 6: eine Darstellung, ähnlich Fig. 5, eines weiteren Ausführungsbeispiels,
- Fig. 7: eine weitere vereinfachte Detaildarstellung eines Ausführungsbeispiels, und
- Fig. 8: ein weiteres erfindungsgemäßes Ausführungsbeispiel in Darstellung analog Fig. 3.

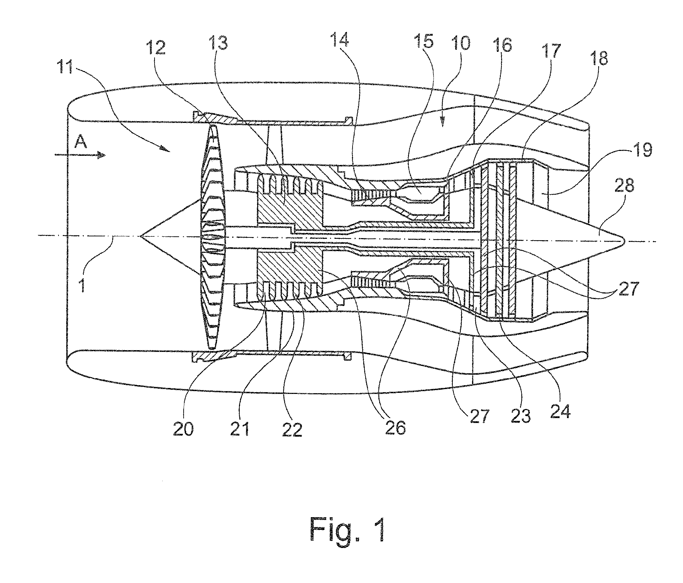

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

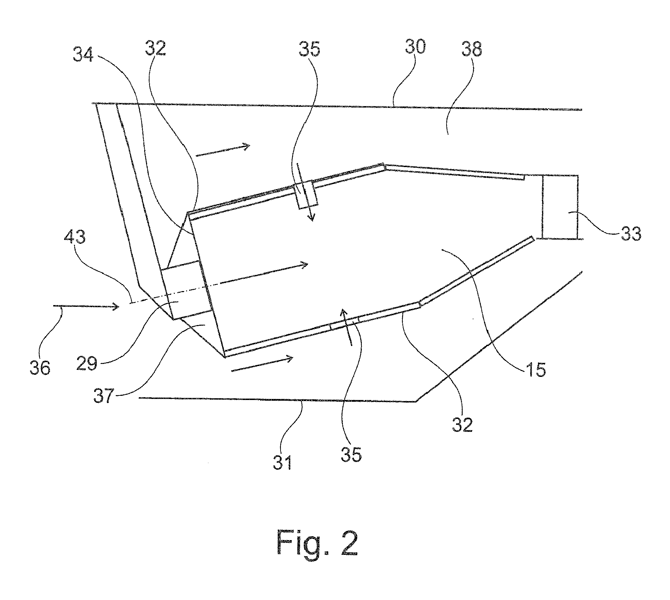

Die Fig. 2 zeigt eine schematische Darstellung einer erfindungsgemäßen Brennkammer. Diese umfasst einen Brenner 29 (Treibstoffdüse), ein Brennkammeraußengehäuse 30 sowie ein Brennkammerinnengehäuse 31. Das Bezugszeichen 32 bezeichnet eine Brennkammerwand. Das Innenvolumen der Brennkammer 15 öffnet sich zu einer schematisch dargestellten Turbinenvorleitreihe 33.

Am Einlaufbereich der Brennkammer ist ein Hitzeschild 34 vorgesehen. Die Zuströmrichtung der Luft ist durch den Pfeil 36 angegeben. In der Brennkammerwand 32 sind Zumischlöcher 35 vorgesehen. Ein Brennkammerkopf 37 ist einstückig mit dem Hitzeschild 34 verbunden. In dem Hitzeschild ist eine Ausnehmung 41 (Hitzeschilddurchführung) vorgesehen, durch welche der Brenner 29 durchgeführt und mittels einer Brennerdichtung 39 (Dichtelement) abgedichtet wird.

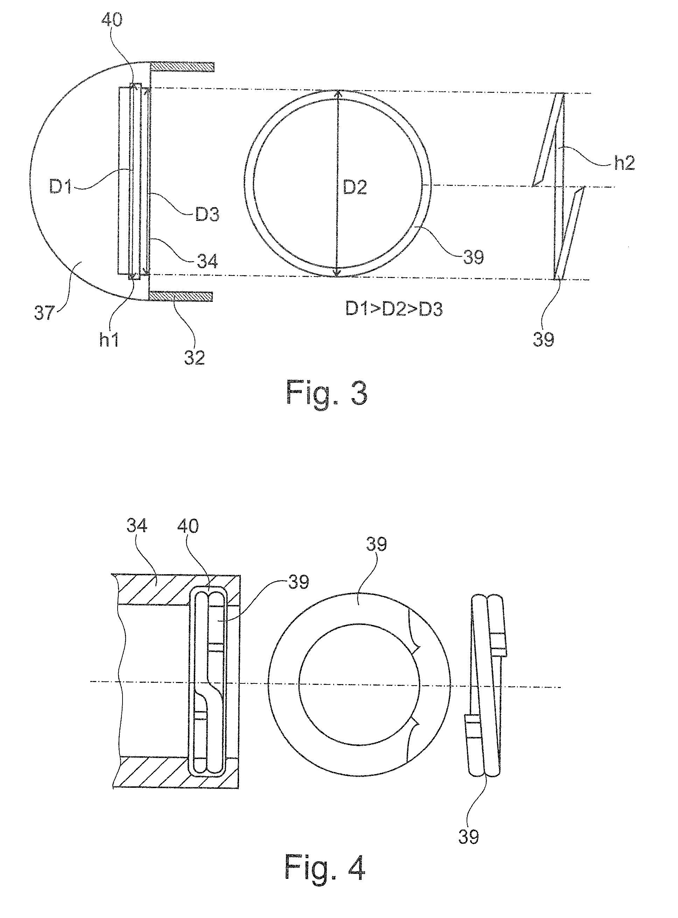

Die Fig. 3 zeigt ein erstes, schematisch dargestelltes Ausführungsbeispiel. Dabei ist ersichtlich, dass erfindungsgemäß eine Nut 40 (Ringnut) vorgesehen ist, in welcher ein elastisches Dichtelement 39 angeordnet ist. Dieses ist, wie sich aus dem mittleren Bereich der Darstellung der Fig. 3 ergibt, ringförmig und, wie die rechte Hälfte der Fig. 3 zeigt, wendelartig oder als Federring ausgebildet. Somit lässt sich das elastische Dichtelement 39 in die Ringnut 40 durch Verändern seines Durchmessers oder durch Drehen in Umfangsrichtungeinführen. Die Ringnut 40 weist einen Durchmesser D1 auf, welcher größer ist, als der Außendurchmesser D2 des elastischen Dichtelements im nichtverformten Zustand. Die Ausnehmung 41 des Hitzeschilds 34 weist einen Innendurchmesser D3 auf, welcher kleiner ist, als der Außendurchmesser D2 des Dichtelements 39. Die axiale Breite h1 ist größer, als die axiale Breite h2 des Dichtelements 39.

Die Fig. 4 zeigt ein abgewandeltes Ausführungsbeispiel, bei welchem das elastische Dichtelement 39 mehrere Windungen einer Feder umfasst und in Form eines Schlüsselrings ausgebildet ist.

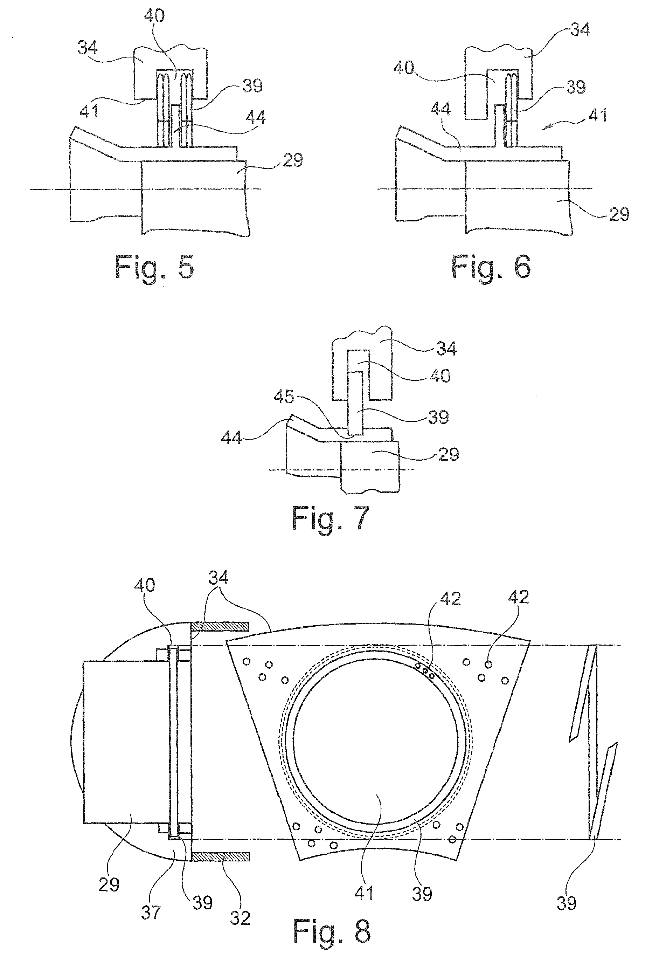

Die Fig. 5 und 6 zeigen Ausführungsbeispiele, bei welchen der Brenner 29 in einer Ringmanschette 44 angeordnet ist, deren Außendurchmesser größer ist, als der freie Innendurchmesser des elastischen Dichtelements 39. Der Brenner befindet sich innerhalb der Ringmanschette 44 und bildet mit dieser keine materielle Einheit. Fig. 5 zeigt ein Ausführungsbeispiel, bei welchem zwei elastische Dichtelemente 39 vorgesehen sind, welche zusätzlich zu der Dichtfunktion eine axiale Sicherung der Ringmanschette 44 bewirken. Bei dem Ausführungsbeispiel der Fig. 6 ist die Ausnehmung 41 in axialer Richtung mit unterschiedlichen Durchmessern versehen, so dass die Ringmanschette 44 gegen eine Wandung der Ringnut 40 in Anlage bringbar ist. Zur Sicherung und Abdichtung ist nur ein elastisches Dichtelement 39 erforderlich.

Die Fig. 7 zeigt ein abgewandeltes Ausführungsbeispiel, bei welchem das elastische Dichtelement 39, welches als Federring oder Schlüsselring ausgebildet ist, sowohl in die Ringnut 40 des Hitzeschildes 34 als auch in eine weitere Ringnut 45 der Ringmanschette 44 eingreift. Auch hier befindet sich der Brenner 29 innerhalb der Ringmanschette 44 und bildet keine materielle Einheit mit der Ringmanschette 44.

Die Fig. 8 zeigt ein Ausführungsbeispiel, bei welchem Effusionslöcher 42 sowohl an dem Hitzeschild 34 als auch an dem elastischen Dichtelement 39 vorgesehen sind. Dabei übernimmt das Dichtelement 39 / der Dichtring auch die Funktion der Ringmanschette 44, das heißt, es wird eine axiale Verschiebung des Brenners 29 relativ zu dem Dichtelement 39 zugelassen, eine Funktion, die bei einem Brenner-Brennkammerinterface grundsätzlich gegeben sein muss.

### Bezugszeichenliste:

- 1: Triebwerksachse
- 10: Gasturbinentriebwerk / Kemtriebwerk
- 11: Lufteinlass
- 12: Fan
- 13: Mitteldruckkompressor (Verdichter)
- 14: Hochdruckkompressor
- 15: Brennkammern
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotomabe
- 28: Auslasskonus
- 29: Treibstoffdüse/Brenner
- 30: Brennkammeraußengehäuse
- 31: Brennkammerinnengehäuse
- 32: Brennkammerwand
- 33: Turbinenvorleitreihe
- 34: Hitzeschild
- 35: Zumischloch
- 36: Zuströmrichtung
- 37: Brennkammerkopf
- 38: Ringkanal/Annulus
- 39: Brennerdichtung/Dichtelement
- 40: Ringnut
- 41: Hitzeschilddurchführung/-ausnehmung
- 42: Effusionsloch
- 43: Brennerachse
- 44: Ringmanschette
- 45: Ringnut

## Patentansprüche

1. Brennkammer für eine Gasturbine mit einem Brennkammerkopf (37) und einem Hitzeschild (34), weiche einstückig ausgebildet sind, wobei das Hitzeschild (34) mit zumindest einer Ausnehmung (41) versehen ist, in welcher ein Brenner (29) angeordnet ist, wobei zwischen dem Hitzeschild (34) und dem Brenner (29) eine Brennerdichtung angeordnet ist, **dadurch gekennzeichnet, dass** das Hitzeschild (34) im Bereich der Ausnehmung (41) mit einer Ringnut (40) versehen ist, in welcher zumindest ein die Brennerdichtung bildendes elastisches Dichtelement (39) angeordnet ist

2. Brennkammer für eine Gasturbine mit einem Brennkammerkopf (37) und einem Hitzeschild (34), welche einstückig ausgebildet sind, wobei das Hitzeschild (34) mit zumindest einer Ausnehmung (41) versehen ist, in welcher eine einen Brenner (29) umgreifende Ringmanschette (44) angeordnet ist, wobei zwischen dem Hitzeschild (34) und der Ringmanschette (44) eine Brennerdichtung angeordnet ist, **dadurch gekennzeichnet, dass** das Hitzeschild (34) im Bereich der Ausnehmung (41) mit einer Ringnut (40) versehen ist, in welcher zumindest ein die Brennerdichtung bildendes elastisches Dichtelement (39) angeordnet ist.

3. Brennkammer nach Anspruch 1 oder 2, **dadurch gekennzeichnet, dass** das elastische Dichtelement (39) im Wesentlichen ringförmig ausgebildet ist und einen elastischen variablen Außendurchmesser aufweist.

4. Brennkammer nach einem der Ansprüche 1 bis 3, **dadurch gekennzeichnet, dass** der Außendurchmesser (D1) der Ringnut (40) größer ist, als der Außendurchmesser (D2) des Dichtelements (39).

5. Brennkammer nach einem der Ansprüche 1 bis 4, **dadurch gekennzeichnet, dass** der Außendurchmesser (D2) des Dichtelements (39) größer ist, als der Innendurchmesser (D3) der Ausnehmung (41).

6. Brennkammer nach einem der Ansprüche 1 bis 5, **dadurch gekennzeichnet, dass** das Dichtelement (39) wendelartig ausgebildet ist.

7. Brennkammer nach einem der Ansprüche 1 bis 6, **dadurch gekennzeichnet, dass** das Dichtelement (39) als Federring ausgebildet ist.

8. Brennkammer nach einem der Ansprüche 1 bis 7, **dadurch gekennzeichnet, dass** das Dichtelement (39) mit Effusionskühllöchern (42) versehen ist.

9. Brennkammer nach einem der Ansprüche 1 bis 8, **dadurch gekennzeichnet, dass** die axiale Länge (h1) der Ringnut (40) größer ist, als die axiale Breite (h2) des elastischen Dichtelements (39).
